Europäisches Patentamt

**European Patent Office**

Office européen des brevets

(19)

(11) Numéro de publication : **0 085 611**

**B2**

(12) **NOUVEAU FASCICULE DE BREVET EUROPÉEN**

(45) Date de publication du nouveau fascicule du brevet :
07.03.90

(21) Numéro de dépôt : 83400176.0

(22) Date de dépôt : 26.01.83

(51) Int. Cl.⁵ : **G 21 C   7/22**, G 21 C 19/30

(54) **Procédé et dispositif de modification de la concentration du poison soluble contenu dans le fluide réfrigérant du circuit primaire d'un réacteur nucléaire.**

(30) Priorité : 27.01.82 FR 8201249

(43) Date de publication de la demande :
10.08.83 Bulletin 83/32

(45) Mention de la délivrance du brevet :
18.12.85 Bulletin 85/51

(45) Mention de la décision concernant l'opposition :
07.03.90 Bulletin 90/10

(84) Etats contractants désignés :
BE CH DE FR GB IT LI

(56) Documents cités :
DE--A-- 2 855 529
DE--B-- 2 830 972
FR--A-- 1 477 058
FR--A-- 1 598 608
FR--A-- 2 076 099
FR--A-- 2 310 616
FR--A-- 2 444 997
US--A-- 3 453 201
US--A-- 3 624 241
US--A-- 4 284 492
Le dossier contient des informations techniques présentées postérieurement au dépôt de la demande et ne figurant pas dans le présent fascicule.

(73) Titulaire : FRAMATOME
Tour Fiat 1, Place de la Coupole
F-92400 Courbevoie (FR)

(72) Inventeur : Dagard, Philippe
20 Avenue de l'Europe
F-78160 Marly-Le-Roi (FR)

(74) Mandataire : Lavoix, Jean et al
c/o Cabinet Lavoix 2, Place D'Estienne D'Orves
F-75441 Paris Cedex 09 (FR)

EP 0 085 611 B2

## Description

La présente invention concerne le réglage de la réactivité d'un réacteur nucléaire à eau sous pression PWR.

Les variations lentes de réactivité dans les réacteurs nucléaires à eau sous pression sont reprises par un ajustement de la concentration d'un poison soluble dans le réfrigérant du circuit primaire. Les origines de ces variations de réactivité sont essentiellement dues à un équipement du combustible au cours du cycle, à un empoisonnement du cœur par la production de produits de fission (Xénon, etc.) ou encore à des changements de la température du réfrigérant entre les conditions d'arrêt à froid et d'arrêt à chaud. Les poisons solubles couramment utilisés peuvent être des sels de gadolinium ou de l'acide borique.

Il est classique d'ajouter la concentration du poison soluble dans le réfrigérant par injection de solution concentrée de poison ou au contraire par dilution du réfrigérant. Cette dernière opération conduit à la formation d'un volume important d'effluents qui doivent être traités avant réutilisation dans le circuit primaire ou rejet.

Pour éviter d'avoir à traiter ces effluents avant leur réutilisation ou leur rejet, on a essayé de diminuer le volume d'effluents obtenus lors du réglage de la concentration du poison dans le réfrigérant. On pourra par exemple se reporter au brevet français FR-A-1 598 608, dans lequel on utilise, pour modifier la concentration de poison soluble dans le réfrigérant, des résines échangeuses d'ions chargées de poison et dont on modifie la capacité de mise en réserve au cours du passage du réfrigérant en faisant varier leur température de fonctionnement, c'est-à-dire celle du réfrigérant ; la fixation du poison sur les résines échangeuses d'ions a lieu à une température de l'ordre de 0-40 °C et, au contraire, son dégagement a lieu vers une température de l'ordre de 60-90 °C. Ainsi les effluents sont stockés dans les résines et ne sont pas évacués. Il n'y a donc aucun problème de retraitement de ces effluents.

On connaît également dans le brevet français FR-A-1 477 058, un procédé de traitement du fluide réfrigérant, dans lequel on règle la concentration de l'acide borique dissout en mettant le fluide réfrigérant en contact avec une résine d'échange d'ions qui retient l'acide borique, on régénère la résine avec un alcali caustique qui enlève l'acide borique de la résine, et on sépare l'acide borique et l'agent de régénération par électrodialyse.

Cependant si les procédés décrits dans ces brevets ne présentent pas l'inconvénient résidant dans la formation d'un volume important d'effluents, ils comportent principalement deux autres inconvénients : ces procédés ne permettent qu'une variation lente de la concentration en poison soluble et ils ne permettent d'ajuster que certaines concentrations de poison situées dans une plage qui est fonction des résines.

La présente invention vise à remédier à ces inconvénients et a pour objet un procédé de modification de la concentration en acide borique en tant que poison soluble contenu dans le fluide réfrigérant du circuit primaire d'un réacteur nucléaire dans lequel on prélève le fluide réfrigérant du circuit primaire, et, en fonction de la concentration de fluide réfrigérant, on fait passer soit la totalité dudit fluide réfrigérant dans au moins un module d'électrodialyse, soit une partie seulement du fluide réfrigérant dans les modules d'électrodialyse, l'autre partie étant dirigée vers au moins un appareil d'osmose inverse, puis on le renvoie dans le circuit primaire, caractérisé par le fait que l'on ajoute au fluide réfrigérant, à sa sortie du circuit primaire, un additif destiné à favoriser la dissociation de l'acide borique.

Selon une autre caractéristique de l'invention, l'additif est de l'ammoniaque.

Selon encore une autre caractéristique de l'invention, on réajuste en ammoniaque le fluide réfrigérant du circuit primaire à l'amont des modules d'électrodialyse et de l'appareil d'osmose inverse.

L'invention a également pour objet un dispositif de mise en œuvre de ce procédé, comportant un premier circuit fermé sur le circuit primaire, un second circuit fermé sur un réservoir d'effluents primaires, ces deux circuits passant tous les deux à travers au moins un module d'électrodialyse commun et le premier circuit comportant au moins un appareil d'osmose inverse, caractérisé par le fait qu'il comporte des moyens pour injecter un additif dans le fluide primaire et des moyens pour éliminer l'additif du fluide réfrigérant à son retour vers le circuit primaire.

Selon d'autres caractéristiques de l'invention,
— lesdits moyens d'injection sont constitués par un lit de résines cationiques,
— lesdits moyens d'injection sont constitués par des zéolithes,
— lesdits moyens d'élimination sont constitués par un lit de résines cationiques,
— lesdits moyens d'élimination sont constitués par des zéolithes,
— lesdits moyens d'élimination sont constitués par un module d'ultrafiltration,
— il comporte un circuit de réajustement en ammoniaque en tant qu'additif du fluide réfrigérant du circuit primaire à l'amont des modules d'électrodialyse et de l'appareil d'osmose inverse,
— le circuit de réajustement se compose d'un compresseur, d'un réservoir de décroissance des effluents gazeux sous pression permettant la liquéfaction de l'ammoniac, et d'un détendeur d'extraction du condensat.

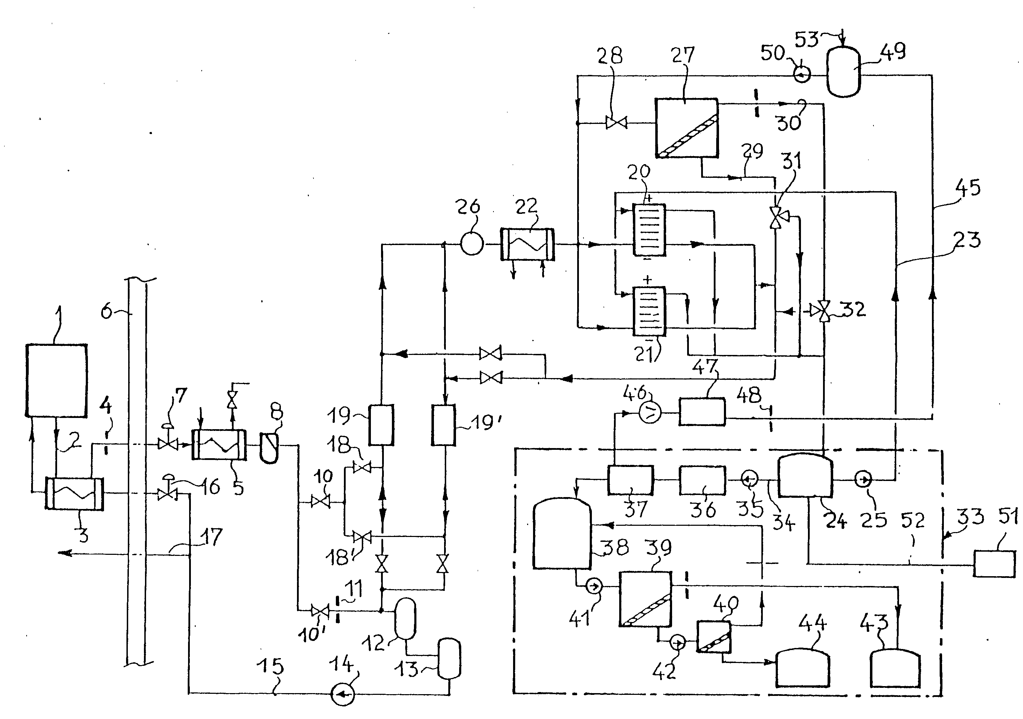

Afin de mieux être comprise, l'invention va être décrite de façon plus précise en se référant plus particulièrement à un mode de réalisation préféré par la figure unique annexée.

Cette figure représente schématiquement un mode de réalisation du dispositif selon l'invention, comportant à la fois des modules d'électrodialyse et un appareil d'osmose inverse et dans lequel un produit basique est injecté dans le fluide réfrigérant puis éliminé, au moyen de deux lits de résine cationique. En outre, sur ce schéma, le dispositif selon l'invention est complété par un circuit de traitement des effluents par osmose inverse.

Plus précisément, la figure représente une installation destinée à modifier la concentration du poison soluble contenu dans le fluide réfrigérant du circuit primaire 1 d'un réacteur nucléaire, le fluide réfrigérant étant constitué par de l'acide borique dilué de 2 000 à 100 ppm (parties par million) de bore. Le fluide réfrigérant est prélevé du circuit primaire 1 au moyen d'une canalisation 2 reliant une branche froide d'une boucle du circuit primaire 1 à l'entrée du côté chaud d'un échangeur de chaleur 3. La sortie de l'échangeur de chaleur 3 est reliée, par l'intermédiaire d'orifices de détente 4, à un deuxième échangeur de chaleur 5 qui refroidit encore le fluide réfrigérant jusqu'à une température comprise entre 30 et 80 °C. L'échangeur de chaleur 3 et les orifices de détente 4 sont placés à l'intérieur de l'enceinte étanche dont on a représenté la paroi 6 alors que le reste de l'installation se situe à l'extérieur. Une vanne 7 permet d'isoler éventuellement l'enceinte du circuit de modification de la concentration du poison. Après son passage dans l'échangeur 5, le fluide réfrigérant est filtré en 8.

Si la concentration en bore, qui a été mesurée préalablement au niveau du circuit primaire, est correcte, la vanne 10 reste fermée alors que la vanne 10' s'ouvre pour permettre au fluide réfrigérant de pénétrer dans un circuit 11, un déminéraliseur 12 et un réservoir de contrôle volumétrique 13. Par l'intermédiaire d'une pompe de charge 14, le réservoir 13 est relié à l'entrée froide de l'échangeur 3 par une ligne 15, munie d'une vanne de réglage 16. Le réservoir 13 est également relié aux joints à fuite contrôlée des pompes primaires par une ligne 17.

Si la concentration en poison soluble du fluide réfrigérant n'est pas correcte, la vanne 10' reste fermée alors que la vanne 10 s'ouvre pour permettre au fluide réfrigérant de pénétrer dans le circuit de modification de la concentration du poison.

L'ouverture de la vanne 18 permet au fluide réfrigérant de passer sur un lit de résines cationiques 19 initialement saturé en cations ($NH_4^-$ par exemple) et d'extraire de celui-ci des ions qui augmentent sa teneur en base ; ceci favorise la dissociation de l'acide borique contenu dans le fluide, avant que celui-ci ne pénètre dans les modules d'électrodialyse 20 et 21 ; le rendement de ces modules est ainsi augmenté.

Avant de pénétrer dans les modules d'électrodialyse 20 et 21, la température du fluide est encore abaissée jusqu'à une température comprise entre 30 et 50 °C par un échangeur de chaleur (ou un pompe à chaleur) 22.

Les modules d'électrodialyse 20 et 21 sont identiques et sont constitués chacun de compartiments séparés par des membranes. De préférence, ces membranes sont de faible épaisseur et présentent une bonne résistance mécanique (on peut utiliser par exemple des membranes d'épaisseur inférieure à 1 mm et dont la surface atteint 1 m²). Ces membranes sont alternativement cationiques et anioniques. Les membranes cationiques ne laissent passer que les cations alors que les membranes anioniques ne laissent passer que les anions. Par conséquent, les compartiments vont contenir alternativement des anions et des cations, ce qui revient à dire qu'ils vont alternativement s'appauvrir ou s'enrichir en poison soluble. Dans le cas que nous décrivons, le poison est constitué par de l'acide borique, presque en totalité dissocié en anions $BO_2^-$ et en cations $H^+$. Ce poison pourrait aussi être constitué par des sels de gadolinium dissociés.

Le circuit amenant le fluide réfrigérant dans les modules d'électrodialyse 20 et 21 se divise, à travers ces modules, en autant de branches qu'il y a de compartiments anioniques s'il doit s'enrichir en bore ou de compartiments cationiques s'il doit s'appauvrir en bore (quand on veut passer d'un enrichissement à un appauvrissement ou réciproquement, l'inversion se fait par inversion des polarités des modules d'électrodialyse ; les compartiments anioniques deviennent cationiques et réciproquement).

Alors que le circuit de fluide réfrigérant traverse par exemple les compartiments anioniques, un autre circuit 23 traverse simultanément les compartiments cationiques. Ce circuit est fermé sur un réservoir 24 des effluents primaires où sont stockés les effluents liquides primaires du type de ceux issus de purges et évents, échappements de soupape, etc. du circuit primaire 1 (représentés sur la figure par le repère 51 et conduits au réservoir 24 par la ligne 52). Le circuit 23 se divise, à l'entrée de chaque module d'électrodialyse 20 ou 21, en autant de branches que le circuit du fluide réfrigérant. La circulation des effluents dans le circuit 23 est assurée par une pompe 25.

Après avoir traversé les modules d'électrodialyse 20 et 21, le fluide réfrigérant est dirigé vers un deuxième lit de résines cationiques 19' qui fixe les ions qui avaient été extraits du lit 19. Le fluide réfrigérant est alors prêt à emprunter le circuit de retour au circuit primaire 1.

On voit sur la figure qu'il est prévu d'inverser les lits 19 et 19', le fluide réfrigérant traversant le lit 19' à l'aller et le lit 19 au retour des modules d'électrodialyse : en effet, au bout d'un certain temps de fonctionnement, le lit duquel sont extraits les ions n'en contient plus suffisamment et le lit qui fixe les ions n'est plus capable d'en fixer davantage. Pour déterminer le moment où l'inversion doit être effectuée, un compteur d'impulsions 26 totalise le débit de fluide réfrigérant fourni aux modules d'électrodialyse : quand le compteur 26 a totalisé un certain débit, l'inversion s'effectue automatiquement.

Quand la concentration en bore du fluide réfrigérant est suffisamment importante (au-dessus de 500 ppm) et quand la variation de cette concentration n'est pas très importante (inférieure à 50 ppm par heure) les modules d'électrodialyse sont utilisés seuls.

Toutefois, quand la concentration en bore est inférieure à 500 ppm ou quand la variation de la concentration doit être supérieure à 50 ppm par heure, les modules d'électrodialyse peuvent s'avérer insuffisants ; en effet, dans ces conditions, la modification de la concentration en bore est possible mais longue. On se trouve dans de telles conditions en fin de cycle de vie du combustible, lorsque la quantité de bore devient faible ou pendant les transitoires de fonctionnement (redémarrage après arrêt à chaud, et empoisonnement maximal du cœur par le xénon, etc.), lorsque la variation de la concentration est importante.

Dans ces conditions, on n'utilise plus les modules d'électrodialyse seuls mais on adjoint à ceux-ci d'autres moyens. Dans le cas de la figure, ces moyens supplémentaires sont constitués par un appareil d'osmose inverse 27. La mise en fonctionnement de l'appareil 27 est commandée par une vanne 28. L'ouverture et la fermeture de cette vanne peuvent être commandées automatiquement en fonction de la concentration en bore. L'appareil d'osmose inverse est un appareil de type classique ; toutefois, on utilise de préférence des membranes se présentant sous forme de fibres creuses en polyamide aromatique. Ces membranes permettent de séparer le fluide réfrigérant en deux solutions, une solution de très faible concentration en bore qui est évacuée de l'appareil d'osmose 27 par la ligne 29 et une solution de très forte concentration en bore qui est évacuée par la ligne 30.

Si l'on souhaite diminuer la concentration en bore du fluide réfrigérant, on ouvre le robinet à trois voies 31 de façon à ce que le fluide évacué par la ligne 29 se dirige vers le lit 19' (ou 19) afin de retourner vers le circuit primaire 1. Dans ce cas, le robinet à trois voies 32 est ouvert de façon à ce que le fluide évacué par la ligne 30 se dirige vers le réservoir d'effluents 24.

Si l'on souhaite augmenter la concentration en bore du fluide réfrigérant, on dirige au contraire le fluide de la ligne 29 vers le réservoir d'effluents 24 et le fluide de la ligne 30 vers les lits 19' ou 19.

Le dispositif que l'on vient de décrire présente de nombreux avantages : il permet de traiter en continu et rapidement de grands volumes de fluide réfrigérant dans une grande plage de concentration du poison soluble. Le même dispositif est utilisé pour augmenter ou pour diminuer la concentration du poison.

La mise en fonctionnement et l'arrêt du dispositif, de même que l'inversion de la fonction, peuvent être automatisés et s'effectuent de façon très rapide.

En outre, le traitement du fluide réfrigérant ne conduit pas à la formation d'un volume important d'effluents puisque les modules d'électrodialyse n'augmentent pas le volume des effluents mais ils ont pour seul effet de concentrer ou de diluer le fluide contenu dans le circuit 23 fermé sur le réservoir d'effluents 24.

Toutefois, si l'appareil d'osmose inverse 27 est utilisé simultanément, le volume d'effluents va tout de même augmenter. C'est pourquoi, on a prévu un dispositif 33 de traitement des effluents contenus dans le réservoir 24. Ce dispositif permet de traiter d'une part les effluents produits par l'appareil d'osmose 27 dans les cas où celui-ci est utilisé et d'autre part les effluents du circuit primaire issus de 51.

Ce dispositif 33 comporte une ligne 34 issu du réservoir 24 dans lequel sont prélevés les effluents au moyen d'une pompe 35. La ligne 34 conduit les effluents tout d'abord dans un déminéralisateur 36 puis dans un module de décontamination et de dégazage 37 et enfin dans un réservoir 38 dans lequel les effluents sont stockés jusqu'à ce que leur volume soit suffisamment important pour démarrer l'opération de traitement. Le traitement est effectué par deux appareils d'osmose inverse 39 et 40 montés en série ; la mise en pression de ces appareils et la circulation du fluide est assurée par deux pompes 41 et 42. Les appareils 39 et 40 permettent la séparation des effluents en une solution concentrée de poison, stockée en 43, et en eau stockée en 44. La solution concentrée de poison issue de l'appareil 40 est recyclée vers le réservoir 38 afin de n'admettre dans le réservoir 43 qu'une solution concentrée d'un niveau élevé constant (de préférence aux alentours de 7 000 ppm).

Du circuit de traitement des effluents est issu un circuit 45 qui permet le réajustement des modules d'électrodialyse 20 et 21 en ammoniaque. Ce circuit 45 compense les fuites d'ammoniaque qui se produisent inévitablement dans les modules d'électrodialyse, l'ammoniaque s'échappant vers le réservoir d'effluents 24. Le circuit de réajustement 45 prélève les effluents après leur dégazage c'est-à-dire à la sortie du module 37 (le module 37 permet en particulier de séparer l'ammoniac des autres gaz dissous dans les effluents, tels que hydrogène ou xénon). Le circuit 45 se compose d'un compresseur 46, d'un réservoir de décroissance des effluents gazeux sous pression 47 permettant la liquéfaction de l'ammoniac, et d'un détendeur 48 d'extraction du condensat obtenu en 47, qui dirige celui-ci dans un réservoir 49. Le réservoir 49 comporte une arrivée d'eau 53 permettant la dissolution de l'ammoniaque. Ce dernier est ensuite injecté dans les électrodialyseurs 20 et 21 quand cela est nécessaire, au moyen d'une pompe 50.

L'invention n'est pas limitée au mode de réalisation qui vient d'être décrit, uniquement à titre d'exemple, mais elle couvre également les variantes revendiquées.

Ainsi, le nombre de modules d'électrodialyse n'est absolument pas limitatif et il dépend en particulier des variations de concentration voulues et du poison soluble concerné. Les modules d'électrodialyse peuvent aussi être disposés en série plutôt qu'en parallèle.

Les lits de résines cationiques 19 et 19' peuvent être remplacés par des zéolithes, dans le cas où l'additif à favoriser la dissociation de l'acide borique n'est pas ionisé (les lits des résines cationiques n'étant utilisés que pour un additif ionisé).

Les lits 19 et 19′ peuvent aussi être remplacés par un dispositif à ultrafiltration : l'additif injecté est dans ce cas constitué de composés basiques à grosses particules, par exemple du type amines, et, à son retour des modules d'électrodialyse, le fluide réfrigérant passe à travers un module d'ultrafiltration qui retient les composés basiques.

Le circuit de traitement des effluents peut aussi utiliser des modules d'électrodialyse plutôt que des modules d'osmose inverse. Il suffit de remplacer les modules 39 et 40 de la figure par un ou plusieurs modules d'électrodialyse montés en série ou en parallèle.

**Revendications**

1. Procédé de modification de la concentration en acide borique en tant que poison soluble contenu dans le fluide réfrigérant du circuit primaire d'un réacteur nucléaire dans lequel on prélève le fluide réfrigérant du circuit primaire (1), et, en fonction de la concentration de fluide réfrigérant, on fait passer soit la totalité dudit fluide réfrigérant dans au moins un module d'électrodialyse (20 ou 21), soit une partie seulement du fluide réfrigérant dans les modules d'électrodialyse (20 ou 21), l'autre partie étant dirigée vers au moins un appareil d'osmose inverse (27), puis on le renvoie dans le circuit primaire, caractérisé par le fait que l'on ajoute au fluide réfrigérant, à sa sortie du circuit primaire, un additif destiné à favoriser la dissociation de l'acide borique.

2. Procédé de modification de la concentration du poison soluble selon la revendication 1, caractérisé par le fait que l'additif est de l'ammoniaque.

3. Procédé de modification de la concentration du poison soluble selon la revendication 2, caractérisé par le fait que l'on réajuste en ammoniaque le fluide réfrigérant du circuit primaire à l'amont des modules d'électrodialyse (20 ou 21) et de l'appareil d'osmose inverse (27).

4. Dispositif de mise en œuvre du procédé selon les revendications 1 à 3, comportant un premier circuit fermé sur le circuit primaire (1), un second circuit (23) fermé sur un réservoir d'effluents primaires (24), ces deux circuits passant tous les deux à travers au moins un module d'électrodialyse commun (20 ou 21) et le premier circuit comportant au moins un appareil d'osmose inverse (27), caractérisé par le fait qu'il comporte des moyens pour injecter un additif dans le fluide primaire (1) et des moyens pour éliminer l'additif du fluide réfrigérant à son retour vers le circuit primaire (1).

5. Dispositif selon la revendication 4, caractérisé par le fait que lesdits moyens d'injection sont constitués par un lit de résines cationiques (19 ou 19′).

6. Dispositif selon la revendication 4, caractérisé par le fait que lesdits moyens d'injection sont constitués par des zéolithes.

7. Dispositif selon l'une des revendications 4 ou 5, caractérisé par le fait que lesdits moyens d'élimination sont constitués par un lit de résines cationiques (19 ou 19′).

8. Dispositif selon l'une des revendications 5 ou 6, caractérisé par le fait que lesdits moyens d'élimination sont constitués par des zéolithes.

9. Dispositif selon la revendication 4, caractérisé par le fait que lesdits moyens d'élimination sont constitués par un module d'ultrafiltration.

10. Dispositif selon la revendication 4, caractérisé par le fait qu'il comporte un circuit de réajustement (45) en ammoniaque en tant qu'additif du fluide réfrigérant du circuit primaire à l'amont des modules d'électrodialyse et de l'appareil d'osmose inverse.

11. Dispositif selon la revendication 10, caractérisé par le fait que le circuit de réajustement (45) se compose d'un compresseur (46), d'un réservoir de décroissance des effluents gazeux sous pression (47) permettant la liquéfaction de l'ammoniac, et d'un détendeur (48) d'extraction du condensat.

**Claims**

1. A process for modifying the concentration of boric acid forming a soluble poison contained in the cooling fluid of the primary circuit of a nuclear reactor, in which the cooling fluid is removed from the primary circuit (1) and, depending on the concentration of the cooling fluid, either the entire cooling fluid is passed to at least one electrodialysis module (20 or 21), or only a part of the cooling fluid is passed to the electrodialysis modules (20 or 21), the other part being directed into at least one reverse osmosis apparatus (27), and is then returned to the primary circuit, characterized in that an additive adapted to promote dissociation of the boric acid is added to the cooling fluid as it leaves the primary circuit.

2. Process for modifying the concentration of the soluble poison according to claim 1, characterized in that the additive is ammonia.

3. Process for modifying the concentration of soluble poison according to claim 2, characterized in that the ammonia in the cooling fluid of the primary circuit is readjusted upstream of the electrodialysis modules (20 or 21) and of the reverse osmosis apparatus (27).

4. Device for carrying out the process according to claims 1 to 3, comprising a first circuit closed on the primary circuit (1) and a second circuit (23) closed on a container of primary effluents (24), said two circuits both passing through at least one common electrodialysis module (20 or 21) and the first circuit comprising at least one reverse osmosis apparatus (27), characterized in that it comprises means for injecting an additive into the primary fluid (1) and means for removing the additive from the cooling fluid as it returns to the primary circuit (1).

5. A device according to claim 4, characterized in that said injection means consists of a bed of cationic resins (19 or 19′).

6. A device according to claim 4, characterized in that said injection means consist of zeolites.

7. A device according to either claim 4 or 5, characterized in that said removal means consist of a bed of cationic resins (19 or 19′).

8. A device according to either claim 5 or 6, characterized in that said removal means consist of zeolites.

9. A device according to claim 4, characterized in that said removal means consists of an ultrafiltration module.

10. A device according to claim 4, characterized in that it comprises a circuit for readjusting (45) the ammonia forming the additive in the cooling liquid of the primary circuit upstream of the electrodialysis module and of the reverse osmosis apparatus.

11. A device according to claim 10, characterized in that the readjustment circuit (45) comprises a compressor (46), a delay reservoir for the gaseous effluents under pressure (47) enabling liquefaction of the ammonia, and of a pressure reducing valve (48) for the extraction of the condensate.

**Patentansprüche**

1. Verfahren zum Ändern der Konzentration von Borsäure als lösbares Gift im Kühlmittel des Primärkreislaufs eines Kernreaktors, bei dem Kühlmittel des Primärkreislaufs (1) entnommen wird und in Abhängigkeit von der Konzentration des Kühlmittels entweder das gesamte Kühlmittel durch wenigstens ein Elektrodialysemodul (20) oder (21) geführt wird, oder nur ein Teil des Kühlmittels durch die Elektrodialysemodule (20) oder (21) geführt wird, wobei der andere Teil wenigstens einem Gerät (27) für Umkehrosmose zugeführt wird, und das Kühlmittel in den Primärkreislauf zurückgeführt wird, dadurch gekennzeichnet, daß dem Kühlmittel bei dessen Austritt aus dem Primärkreislauf ein Zusatz zugeführt wird, der die Dissoziation der Borsäure begünstigt.

2. Verfahren nach Anspruch 1, dadurch gekennzeichnet, daß der Zusatz Ammoniak ist.

3. Verfahren nach Anspruch 2, dadurch gekennzeichnet, daß das Kühlmittel des Primärkreislaufs stromauf bezüglich der Elektrodialysemodule (20) oder (21) und des Gerätes für die Umkehrosmose noch eingestellt wird.

4. Vorrichtung zum Durchführen des Verfahrens nach einem der Ansprüche 1 bis 3, mit einem geschlossenen ersten Kreislauf am Primärkreislauf (1), einem geschlossenen zweiten Kreislauf (23) an einem Vorratsbehälter (24) für die Primärabflüsse, wobei alle beiden Kreisläufe wenigstens einen gemeinsamen Elektrodialysemodul (20) oder (21) durchlaufen, und wobei der Primärkreislauf wenigstens ein Gerät (27) für Umkehrosmose aufweist, gekennzeichnet durch eine Einrichtung zum Einführen eines Zusatzes in das Primärfluid (1) und eine Einrichtung zum Entfernen des Zusatzes aus dem Kühlfluid bei dessen Rücklauf zum Primärkreis (1).

5. Vorrichtung nach Anspruch 4, dadurch gekennzeichnet, daß die Einführeinrichtung aus einem Bett (19 oder 19′) aus kationischen Harzen besteht.

6. Vorrichtung nach Anspruch 4, dadurch gekennzeichnet, daß die Einführeinrichtung aus Zeolithen besteht.

7. Vorrichtung nach einem der Ansprüche 4 oder 5, dadurch gekennzeichnet, daß die Entfernungseinrichtung aus einem Bett (19 oder 19′) aus kationischen Harzen besteht.

8. Vorrichtung nach einem der Ansprüche 5 oder 6, dadurch gekennzeichnet, daß die Entfernungseinrichtung aus Zeolithen besteht.

9. Vorrichtung nach Anspruch 4, dadurch gekennzeichnet, daß die Entfernungseinrichtung aus einem Ultrafiltrationsmodul besteht.

10. Vorrichtung nach Anspruch 4, gekennzeichnet durch einen Einstellkreis (45) für Ammoniak als Zusatz für das Kühlmittel des Primärkreislaufs stromauf bezüglich der Elektrodialysegeräte und der Geräte für die Umkehrosmose.

11. Vorrichtung nach Anspruch 10, dadurch gekennzeichnet, daß der Einstellkreis (45) einen Kompressor (46), ein Abklingbehälter (47) für die unter Druck stehenden gasförmigen Abgänge zur Verflüssigung von Ammoniak und einen Druckminderer (48) zum Entnehmen des Kondensats aufweist.

EP 0 085 611 B2